Europäisches Patentamt

(19) European Patent Office

Office européen des brevets

(11) Publication number: **0 259 285**
**A2**

(12) **EUROPEAN PATENT APPLICATION**

(21) Application number: **87850262.4**

(22) Date of filing: **28.08.87**

(51) Int. Cl.⁴: **B 65 B 25/06**

(30) Priority: **02.09.86 US 902600**

(43) Date of publication of application:
**09.03.88 Bulletin 88/10**

(84) Designated Contracting States:
**AT BE CH DE ES FR GB GR IT LI LU NL SE**

(71) Applicant: **Geo. A. Hormel & Co.**
**P.O. Box 800**
**Austin Minnesota 55912 (US)**

(72) Inventor: **Waldman, Richard C.**
**R.R. 5, Box 185**
**Austin Minnesota 55912 (US)**

**Goldstrand, Richard E.**
**6709 Corneilia Drive**
**Edina Minnesota 55435 (US)**

(74) Representative: **Ström, Tore et al**
**Ström & Gulliksson AB Studentgatan 1 P.O. Box 4188**
**S-203 13 Malmö (SE)**

(54) Process for improving the eating and preservation qualities of uncured pork products.

(57) The process for improving the flavor and preservation qualities of uncured pork products includes infusing the fresh cuts of pork with a pork stock solution including water, dried pork stock, salt, sodium phosphates, and sodium erythorbate. The infused pork cuts are then crust frozen and the crust frozen pork cuts are then tempered for a predetermined period of time until the internal temperature reaches approximately 26 - 28 degrees Fahrenheit. The tempered pork cuts are then shaped in a molding press and are thereafter sliced. The pork slices have sodium erythorbate applied thereto and the slices are then placed in a tray and a gas pervious film is applied skin-tight to the slices in the upper surface of the tray. The packages are then frozen before shipment to retail outlets to thereby increase the shelf life of the packages.

Fig 6

## Description

## PROCESS FOR IMPROVING THE EATING AND PRESERVATION QUALITIES OF UNCURED PORK PRODUCTS

This invention relates to a process for improving the taste and preservation qualities of uncured pork products.

## BACKGROUND OF THE INVENTION

Traditionally, the greatest proportion of pork carcasses is sold as a cured product, which is cured with salt and sodium nitrite. Pork cured in this manner has the typical reddish color and also has a particular flavor profile. Prior to 1982, the U. S. Department of Agriculture (USDA) prohibited the use of phosphates in fresh pork products; but, since that time, the regulations were changed to allow the use of phosphates at a level of 0.5% by weight of the total product. This change in the regulations opened the way for imaginative formulations and processes which differed from the customary cured form.

In terms of customer preference, many prefer the flavor and texture properties of fresh pork, and some of the pork cuts, such as loins and shoulder butts, are consumed in the uncured form. However, pork is often considered tough and dry after preparation, using most methods of cooking. This dryness and toughness may be attributed to the fact that uncured pork is more thoroughly cooked than other meats, which results in purging of much of the intramuscular juices during the cooking process. Many consumers also complain that uncured pork products are bland and lack juiciness and taste.

Many fresh meat products, including pork cuts, are packaged in conventional overwrapped trays. In the conventional overwrapped tray packages, the shelf life of the packages held at acceptable refrigerated temperatures is approximately three days. Meat product undergoes rapid discoloration due to oxidation of the meat pigments and such discolored products are usually rejected by consumers. The problems associated with fresh meat packaged in conventional overwrapped trays are also discussed in a co-pending Application Serial No. 859,701, filed on May 5, 1986, and entitled PROCESS FOR VACUUM PACKAGING FRESH MEAT PRODUCTS. This Application is a Continuation-in-Part Application of co-pending Applicaton Serial No. 859,701.

## SUMMARY OF THE INVENTION

An object of this invention is to provide a novel process for enhancing the eating characteristics of an uncured pork product, in which the uncured pork is pumped with a pork stock solution containing phosphates and erythorbate, to thereby improve the flavor, juiciness, and water binding capacity thereof.

Another object of this invention is to provide a process for improving the eating and keeping properties of fresh pork products, in which the fresh uncured pork is pumped with a pork stock solution containing phosphates and erythorbate, and thereafter packaging the fresh pork product in a highly innovative and attractive package, including a tray and a non-barrier film, to substantially increase the shelf life of the pork product.

These and other objects of the invention will be more fully described in the following Specification.

## FIGURES OF THE DRAWING

Figure 1 is a perspective view illustrating a package of fresh meat product produced in accordance with the novel process;

Figure 2 is a perspective view of a different meat cut produced in accordance with the novel process;

Figure 3 is a cross-sectional view taken approximately along line 3-3 of Figure 1 and looking in the direction of the arrows;

Figure 4 is a diagrammatic view of one of the molding dies used to form or shape one of the meat cuts;

Figure 5 is a diagrammatic view of a different form of molding die used in the novel process; and

Figure 6 is a block diagram illustrating the steps of the novel process.

## DESCRIPTION OF THE PREFERRED EMBODIMENT

In the preferred embodiment fresh uncooked, uncured pork products are treated and packaged and are ultimately shipped to retail outlets for purchase by consumers. The present process not only increases the shelf life of the fresh uncured pork products, but also enhances the edibility characteristics of the product, including flavor, textural properties, and juiciness.

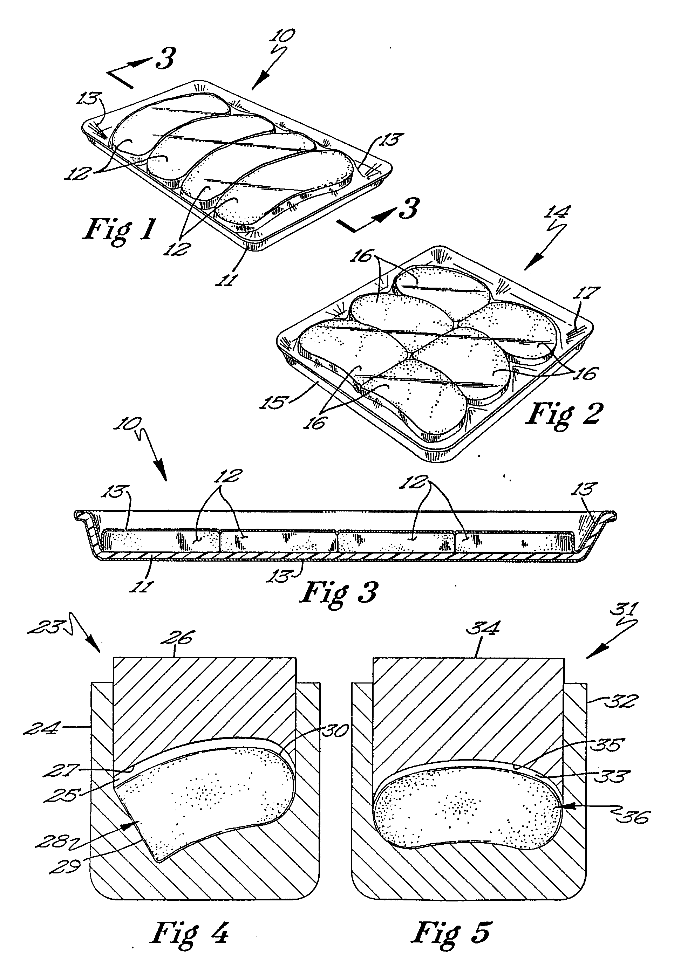

Referring now to the drawings and, more specifically, to Figure 1, it will be seen that one embodiment of a package of fresh meat slices, designated generally by the reference numeral 10, which has been prepared by the novel process, is thereshown. The package 10 includes a tray 11 having fresh meat slices or cuts 12 positioned thereon and covered in skin-tight relation by a film 13.

Figure 2 illustrates another package of fresh meat slices, designated generally by the reference numeral 14, which also includes a tray 15 having slices or cuts of fresh meat 16 positioned thereon and covered in skin-tight relation by a film 17.

Figure 3 is a cross-sectional view illustrating the skin-tight relation of the film which covers the meat slices. In this regard, it will be noted that the film engages all of those exposed surfaces of the meat and all of the upper exposed surfaces of the tray. Since the film is transparent, and adheres to the upper surface of the tray and to all exposed surfaces of the meat in skin-tight relation, a casual observer will not perceive the presence of the film, and the meat will appear as though it is positioned in uncovered relation on the tray.

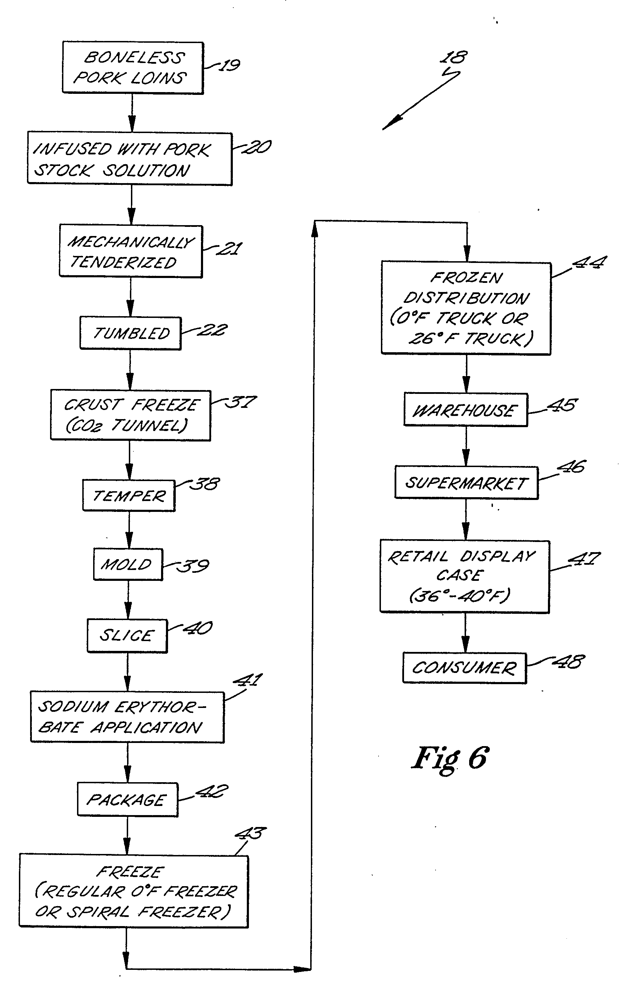

Referring now to Figure 6, it will be seen that the various steps of the novel process are illustrated by a block diagram, designated generally by the reference numeral 18. The initial preparation step is designated in the block diagram as 19. In this process step, fresh pork primal cuts are preferably deboned and trimmed of fat to approximately 1/8 inch thick or less. In the event that pork loins are used, it is preferred that the ham end of the loin be removed, although the ham end may be included to provide a source for sirloin chops. In other instances, the pork loin or other primal cuts may be used without deboning the loin so that the bone-in chops or semi-boneless chops are produced by the process.

The fresh pork primal cut is then pumped or infused with a pork stock solution made up from water, dried pork stock, salt, sodium phosphate, and sodium erythorbate. Phosphates improve water binding of the infused fresh pork cut, and the phosphates also improve the tenderness of the cut and contribute to color stability. Sodium erythorbate is an anti-oxidant and serves to stabilize the red color of the meat. It is pointed out that the formulation may also include flavorings, either artificial or natural, such as spices, herbs, oleoresins, and the like. Further, the formulation may include other anti-oxidant - color stabilizing substances, such as ascorbic and/or citric acid (or their salts), rather than sodium erythorbate. It is pointed out that the present process . step, designated by the reference numeral 20, may also be used with respect to fresh cooked pork products. The following is an example of the basic formulation for fresh non-flavored pork cuts, fresh flavored pork cuts, and fresh cooked pork products.

| Item | Fresh Non-Flavored % | Fresh Flavored % | Fresh Cooked % |
|---|---|---|---|
| Pork Stock | 81.40 | 74.00 | 78.25 |
| Salt | 15.00 | | 8.75 |
| Sodium Phosphates | 3.00 | 3.00 | 1.50 |
| Sodium Erythorbate | 0.50 | 0.50 | 0.25 |
| Dextrose | | 17.50 | 8.75 |
| Flavoring | | 5.00 | 2.50 |

Primal cuts which are to be marketed in uncooked condition are first infused with a pork stock solution to approximately 110% of the original weight of the primal cut. It is preferred that the primal cuts be infused with the pork stock solution using a commercial meat pumping machine of the type that uses low pressure pumping with a large number of needles. For example, a commercial meat pumping machine of this type includes a pumping machine Model No. PI-31, marketed by Protocon, Inc., of The Netherlands. Cooked pork products are also infused with the pork stock solution, but are pumped to 120% of the original weight of each primal cut.

The uncooked, uncured pork products in a frozen or fresh condition may also be mechanically tenderized in a tenderizing step 21 with needle or blade-type meat tenderizing equipment, preferably tenderizing equipment made by Ross Industries, of Midland, Virginia, and sold under the Trademark Ross Tenderizer Model 700M.

In the preferred embodiment of the process, the primal cuts are subjected to a tumbling step 22 after the cuts have been infused with the pork stock solution. The tumbling of the infused pork cuts effectively distributes the pork stock solution throughout the tissues of the cut and thereby improves the flavor, as well as the water retention characteristics of the cut.

After the primal cuts, such as pork loins and the like, have been tumbled, the primal cuts are then transported to a $CO_2$ tunnel, such as is sold commercially by Cardox Corporation. This apparatus comprises an elongate $CO_2$ tunnel having a conveyor belt extending therethrough. These primal cuts are placed on a conveyor belt and are moved through the $CO_2$ tunnel. The temperature within the $CO_2$ tunnel is approximately -70 to -90 degrees Fahrenheit and the loins are moved through the $CO_2$ tunnel within a period of approximately 10 to 12 minutes. This residence time within the $CO_2$ tunnel causes the loins to be frozen to a depth of approximately 3/8 to 1/2 inch, while the remaining portion of the loin remains unfrozen. The loins are, therefore, crust frozen in a crust freezing step 37 as they are passed through the $CO_2$ tunnel.

After the uncured pork cuts have been crust frozen in the $CO_2$ tunnel, the cuts are placed upon racks, and transfered to a freezer. This is done as soon as possible to minimize any significant thawing of the crust frozen primal cuts. The tempering step, designated by the reference numeral 38, takes place in the tempering chamber at a temperature from about 24 to 28 degrees Fahrenheit for a period of approximately 8 to 12 hours. After tempering, the loins should have an internal temperature of 25 to 28 degrees Fahrenheit.

The tempered loins are then removed from the tempering chamber and are transported to the molds where the mold step, designated generally by the reference numeral 39, takes place. Pressing or molding may be done in a Bettcher Dyna-Form Model 75, manufactured by Bettcher Industries. Referring now to Figure 4, it will be seen that one embodiment of the mold or press, designated by the reference numeral 23, is thereshown. The mold or press 23 includes a female die member 24 having a cavity 25 therein. A male die member 26 is movable in the female die member and has a concave lower die surface 27.

3

It will be noted in Figure 4 that the loin 28 is shaped by the press 23 so that one side 29 of the loin is substantially flat, while the other side 30 is rounded. After the loin 28 has been molded and is thereafter sliced, it will produce the slice 16 illustrated in the package 14 of Figure 2.

Referring now to Figure 5, it will be seen that a different embodiment of the mold or press, designated generally by the reference numeral 31, is thereshown. The press 31 includes a female die 32 having a cavity 33 therein. A male die 34 is movable in the female die 32 and also has a concave lower surface 35. The loin 36, shaped by the mold 31, when sliced, produces a kidney-shaped slice corresponding to the slice 12 in the package 10 of Figure 1. The sliced loins are then taken to the slicing station where the slicing step, designated generally by the reference numeral 40, takes place.

Temperature control of the shaped loins is essential in order to obtain the desired results. In this regard, the loins to be sliced should have an internal temperature of 28 - 30 degrees Fahrenheit.

The shaped loins may be sliced in any of the commercially available slicers commonly used in meat packaging plants.

After slicing, the uncured fresh pork has sodium erythorbate applied to the surfaces thereof to further protect against discoloration. In the preferred embodiment, the pork cuts are dipped in a 10 percent sodium erythorbate solution, although the sodium erythorbate solution may also be sprayed on the slices or, alternatively, applied to the surface of the cuts in a dry application. It is further pointed out that sodium ascorbate or ascorbic acid may be used instead of sodium erythorbate.

After the application of sodium erythorbate to the slices, the sliced fresh meat is moved as quickly as it may conveniently be done to the packaging station where the packaging step, designated generally by the reference numeral 42, is accomplished. The packaging of the sliced fresh pork or other sliced whole meat product is packaged on a Cryovac VS 44 Mark II Machine, manufactured by W. R. Grace & Co. The trays 11 and 15 are formed from either 10 or 12 mil. barrier film, and the films 13 and 17 comprise a 4 or 6 mil. non-barrier film. The tray 11 is 5-1/2 by 9-3/4 inches and the tray is 8 by 9-3/4 inches. Both of the trays 11 and 15 are 5 mm. deep. It is pointed out that deeper trays will be used for roasts. It is pointed out that. because of the sensitivity and nature of the top films 13 and 17, the temperature of the slices to be packaged is critical. The optimum temperature range for the meat slices during packaging is 28 - 30 degrees Fahrenheit.

The films 13 and 17 are vacuum applied and adhere skin-tight to all exposed surfaces of the meat and upper surface of the trays, as illustrated in Figure 3. This not only produces an extremely attractive appearance, but the skin-tight inter-engagement between the film and meat slice tray precludes the occurrence of purge or weepage. Since the covering film is non-barrier, gases which might be produced by organisms in and on the meat slices may pass outwardly through the skin, while oxygen may pass inwardly through the film. This arrangement contributes to the red bloom of the meat and allows noxious gases to escape from the package. Since the film adheres to the meat slices and upper surface of the tray in skin-tight relation, the packaged meat does not appear to be covered by a packaging material.

After the fresh whole meat slices have been packaged in either a package 10 or a package 14, the packaged product is labeled, boxed, and sent to a 0 degrees Fahrenheit freezer as soon as possible. Alternatively, the product may be "deep chilled" at a temperature of approximately 26 - 28 degrees Fahrenheit. The packaged products may be frozen in any suitable freezing process, such as blast chilling or the like. After the product has been frozen in the 0 degree freezer during the freeze step 39, the product is ready for distribution.

The frozen boxed packages are then transported by truck to the customer's warehouse or other distribution point. It is preferred that the frozen product be transported in a 0 degree Fahrenheit truck or a 24 - 28 degree Fahrenheit truck. It is preferred that the product be retained in a frozen condition or at a temperature below 26 degrees Fahrenheit until it is ready to be placed in a store display. In this regard, the product will be thawed in a 34 - 38 degree Fahrenheit cooler prior to display in the refrigerated meat case. The product is typically displayed in a retail display case at a temperature of 34 to 40 degrees Fahrenheit. The consumer 42 may then select the desired package 10 or 14 from the display case for consumption.

A test procedure was followed to determine the effectiveness of the infusion of the pork cuts with the pork stock solution. In this test, most of the steps illustrated in Figure 6 were omitted to determine solely the effectiveness of the infusion step with respect to odor, slime, juice clarity, percentage of purge juices, and taste.

Boneless center cut pork loins (from 14/18 lb. loins) selected for normal pork color were used in this test. Half of the loins were cut into 3/4 inch chops and then immediately vacuum packaged in film with a high oxygen barrier. The remaining half of the loins were infused to 110% of original weight with a solution containing water, salt, flavorings and sodium phosphates (0.25%). The pumped product was then tenderized twice using a blade type pinning machine manufactured by Ross Industries. The loins were then massaged for 6 hours in a tumbler (KSI Industries) using a 10-minute on, 50-minute off schedule. The loins were then cut into 3/4 inch chops and packaged in the same manner as done with the fresh chops.

Two packages of each type product were evaluated after two weeks of storage in a 36 - 38 degree Fahrenheit cooler and each week thereafter through four weeks of storage. At each endpoint, the samples were opened and evaluated for odor, presence of slime and clarity and amount of purged juices. The samples were then served to a taste panel which rated the sample for freshness (off-flavor).

The following table gives the results of these evaluations:

| Sample | Storage Time (Weeks) | Odor | Slime | Juice Clarity | Purged Juices % | Taste Panel (Rating) | Taste Panel Accept-ability % |
|---|---|---|---|---|---|---|---|
| Fresh Chops | 2 | 0 | 0 | 0 | 6.76 | 7.6 | 90 |
| Pumped Chops | 2 | 0 | 0 | 0 | 3.03 | 5.9 | 80 |
| Fresh Chops | 3 | 0.5 | 1.0 | 0.5 | 8.28 | 8.2 | 90 |
| Pumped Chops | 3 | 0 | 0 | 0 | 2.97 | 6.5 | 80 |
| Fresh Chops | 4 | 0.5 | 0.5 | 1.0 | 7.83 | 8.2 | 100 |
| Pumped Chops | 4 | 0 | 0 | 0 | 3.21 | 8.8 | 100 |

Odor: 0 = Normal Fresh Pork; 1 = Slightly Acceptable; 2 = Offensive

Slime: 0 = None; 1 = Small Amount; 2 = Offensive

Juice Clarity: 0 = Normal, Clear; 1 = Slightly off-color and/or opaque; 2 = Off-color, thick

Taste Panel Rating: 9 = None; 1 = Strong

The results show an advantage for the pumped chops in regard to odor, slime formation and clarity of package juices at three or four weeks of storage. In addition, the amount of purged juices in fresh chop packages was more than twice that found in the pumped chop packages regardless of the fact that 10% fluid was added. Taste panelists gave a slightly higher rating to the fresh chops at 2 and 3 weeks, but this was reversed at 4 weeks. Acceptability of both types of chops was good in all evaluations.

Tests were conducted which studied the effect of sodium erythorbate dip solution on color preservation and uniformity of fresh pork products.

Loins from three animals were used in the test. All treatments were represented in each animal and all comparisons were made between the chops from each animal. The loins were boned, trimmed of fat to approximately 1/8 inch maximum thickness and then pumped to 110% of original weight with the fresh, flavored formula listed above. Half of the pumped loins were then chilled to approximately 36 degrees Fahrenheit overnight, while the remaining half were cut into 3/4 inch thick chops about 3 hours after pumping. On cutting the chops, half in each case were allowed to "bloom" for about one hour and the other half immediately dipped into the 10% sodium erythorbate solution described above. The chops were then placed in foam trays and overwrapped with an oxygen permeable film. The packages were then evaluated for color and uniformity of color in a lighted show case and after holding in a carton (no light). It was found that product color was excellent on cutting the chops and after packaging.

Some variation in color was noted in non-bloomed muscles. After three days, all samples showed some color variation. Chops from loins held overnight prior to cutting had better color and uniformity than those not held, although none showed complete uniformity. Color during this period did not appear to be significantly different due to light or dark conditions. Dipping in erythorbate solution significantly improved color uniformity on products packed the same day of pumping. Dipping improved color in all cases but those allowed to bloom prior to dipping showed the least effect.

The present process is especially adapted to forming and packaging boneless 1/4 inch wafer slices, 5/8 inch loin and rib slices, and 1 inch thick loin chops. It will be appreciated that primal cuts of meats, other than loins, may be used as the source of meat slices produced pursuant to the present process.

From the foregoing description, it will be seen that the novel process allows the production of a package of fresh sliced meat product, which not only has an extended shelf-life over conventionally packaged products, but also produces a package having high customer appeal.

Therefore, the present invention is directed to a process which permits fresh sliced meat products to be formed and packaged in a manner more efficient than any heretofore known comparable process.

## Claims

1. A process for improving the flavor and preservation qualities of uncured pork products, comprising:

trimming the fat from fresh primal cuts of pork,

infusing the fresh cuts of pork with a pork stock solution comprising water, dried pork stock, salt, sodium phosphates, and sodium erythorbate, each primal cut being infused to approximately 110 percent - 120 percent of its original weight with the pork stock solution, and

packaging the primal cuts in a tray formed of an oxygen barrier film, and applying an overwrap skin-tight material formed of a non-barrier film to the tray containing a primal cut to permit the formation and maintenance of oxymyoglobin on the surface of the primal cut, and quickly moving the packaged meat to a cooling zone having a temperature within the range of 28 - 30 degrees Fahrenheit.

2. The process as defined in Claim 1 wherein said primal cuts are dipped in a 10 percent sodium erythorbate solution prior to packaging the primal meat cuts.

3. The process as defined in Claim 1 wherein said pork stock solution includes a flavoring agent selected from the group including natural or artificial flavoring.

4. A process for improving the flavor and preservation qualities of uncured pork products, comprising:

infusing fresh primal cuts of pork with a pork solution comprising water, dried pork stock, salt, sodium phosphates, and sodium erythorbate,

placing the fresh pork cuts in a low temperature zone and subjecting the pork cuts to a sub-freezing temperature for a short period of time to freeze only the crust of the pork cuts,

removing the crust frozen pork cuts from the low temperature zone and placing the cuts in a tempering zone for a period of time so that each pork cut has an internal temperature of about 26 to 28 degrees Fahrenheit,

placing the tempered pork cuts in a molding press, molding each cut into a predetermined shape,

slicing the molded pork cuts into slices of uniform predetermined thickness,

placing a predetermined number of meat slices upon the upper surface of the tray formed of gas impervious plastic film of a predetermined thickness,

applying a gas pervious film to the meat slices and the tray to cover the meat slices on the tray and evacuating air from the film covered meat slices so that the gas pervious film adheres tightly to all exposed surfaces of the meat slices and adheres tightly to all portions of the upper surface of the tray not covered by the meat slices, to thereby create the impression that the meat slices are uncovered by any packaging material and appear to be completely exposed, and

thereafter placing the packages in a freezing chamber to freeze the meat slices to thereby increase the shelf life and red color of the packaged meat slices, while minimizing the occurrence of bad odors and reducing the amount of purge with respect to the packaged meat slices.

5. The process as defined in Claim 3 wherein sodium erythorbate is applied to the meat slices prior to packaging thereof.

6. The process as defined in Claim 3 wherein said pork cuts are mechanically tumbled after the infusion of the pork stock solution and prior to crust freezing of the pork cuts.

7. The process as defined in Claim 3 wherein each pork cut is infused with the pork stock solution to approximately 110 - 120 percent of its original weight.

8. The process as defined in Claim 3 wherein said pork cuts are dipped in a 10 percent sodium erythorbate solution immediately after slicing and prior to packaging thereof.

9. The process as defined in Claim 7 wherein said fresh pork cuts are mechanically tenderized after the infusion with the pork stock solution and just prior to tumbling thereof.

10. The process as defined in Claim 3 wherein said pork cuts are subjected to a temperature of approximately -70 degrees to approximately -90 degrees Fahrenheit for a period of about 10 to 12 minutes during the crust freezing step thereof.

11. The process as defined in Claim 3 wherein said pork stock solution includes a flavoring agent selected from the group including natural or artificial flavoring.

0259285

Fig 1

Fig 2

Fig 3

Fig 4

Fig 5

0259285

BONELESS PORK LOINS 19

INFUSED WITH PORK STOCK SOLUTION 20

MECHANICALLY TENDERIZED 21

TUMBLED 22

CRUST FREEZE (CO₂ TUNNEL) 37

TEMPER 38

MOLD 39

SLICE 40

SODIUM ERYTHOR-BATE APPLICATION 41

PACKAGE 42

FREEZE (REGULAR 0°F FREEZER OR SPIRAL FREEZER) 43

18

FROZEN DISTRIBUTION (0°F TRUCK OR 26°F TRUCK) 44

WAREHOUSE 45

SUPERMARKET 46

RETAIL DISPLAY CASE (36°-40°F) 47

CONSUMER 48

Fig 6